# EUROPÄISCHE PATENTSCHRIFT

(11) **EP 1 476 252 B1**
(45) Veröffentlichungstag und Bekanntmachung des Hinweises auf die Patenterteilung: **23.08.2006**
(21) Anmeldenummer: 03742521.2
(22) Anmeldetag: 15.02.2003
(51) Int. Cl.: B03B 5/28, B29B 17/02, B29B 17/00, C08J 11/08

(54) **VERFAHREN ZUM RECYCLING VON BESCHICHTETEN KUNSTSTOFF-FORMKÖRPERN**
METHOD FOR RECYCLING COATED PLASTIC MOLDED BODIES
PROCEDE DE RECYCLAGE DE CORPS MOULES EN MATIERE PLASTIQUE REVETUS

(30) Priorität: 22.02.2002 DE 10207591
(43) Veröffentlichungstag der Anmeldung: 17.11.2004
(73) Patentinhaber: Kuraray Specialities Europe GmbH, 65926 Frankfurt am Main (DE)
(72) Erfinder: FUSS, Robert, 65835 Liederbach (DE)
(74) Vertreter: Kisters, Michael Marcus
(86) Internationale Anmeldenummer: PCT/EP2003/001524
(87) Internationale Veröffentlichungsnummer: WO 2003/070376

(56) Entgegenhaltungen:
- EP-A- 0 525 708
- DE-A- 4 127 705
- DE-A- 4 328 016
- US-A- 4 543 364
- US-A- 5 143 308
- US-A- 5 419 967
- US-A- 5 554 657

## Beschreibung

Der Einsatz von gewichtsreduzierten Verpackungen, speziell im Bereich der Getränkeverpackungen, nimmt ständig zu. Die Substitution von Glas durch Kunststoffe, insbesondere durch PET-Gebinde, schreitet stetig voran. Um jedoch die Eigenschaften von Glas im Hinblick auf Gasbarrieren zu erzielen, ist PET nur dann hinreichend, wenn die Flaschen entsprechend dickwandig sind. Damit ist jedoch ein höherer Materialeinsatz notwendig als aus statischen Gründen erforderlich wäre. Dies wirkt sich neben höheren Materialeinsatzkosten insbesondere nachteilig zu Lasten der gewünschten Gewichtsreduktion aus.

Aus diesem Grunde ist der Einsatz von (Gas-)Barriereschichten angezeigt. Neben den bekannten Möglichkeiten der, unter anderem kostenintensiven, Coextrusionsverfahren, bei denen im einfachsten Falle eine Mehrschichtabfolge wie z.B. Polyethylenterephthalat (PET)/Barriereschicht/Polyethylenterephthalat (PET) erreicht wird, gibt es auch Verfahren zur Aufbringung einer inneren oder äußeren, zumeist anorganischen, (Gas-)Barriereschicht. Dies sind insbesondere plasmagestützte Bedampfungsverfahren, vorzugsweise mit Aluminium bzw. dessen Oxiden, Silizium bzw. dessen Oxiden oder Kohlenstoff. Bei äußeren, meist anorganischen Beschichtungen hat sich die mechanische Beständigkeit als unzureichend erwiesen. Die beschichteten Kunststoff-Formkörper sind im normalen Füll- und Verpackungsprozess bereits so großen mechanischen Belastungen ausgesetzt, dass die Oberflächen verletzt werden und somit die erhoffte (Gas-)Barriere dramatisch vermindert wird. Dies führt dazu, dass eine weitere Schutzschicht aufgebracht werden muss, die die anorganische (Gas-) Barriereschicht vor den mechanischen Einwirkungen schützen soll.

In der nicht-vorveröffentlichten Deutschen Patentanmeldung 101 53 210.5 wird die Herstellung eines Kunststoff-Formkörpers beschrieben, der die hohen Anforderungen an die Gasbarriere erfüllt, mechanisch stabil, feuchtigkeits- und wasserresistent ist und bei normalem Einsatz hinreichend gute Gebrauchseigenschaften aufweist.

Das dort beschriebene Herstellungsverfahren für Kunststoff-Formkörper besteht hauptsächlich darin, dass ein Kunststoff-Formkörper (entweder vor dem Blasextrudieren oder danach) mit zwei unterschiedlichen Polymeren beschichtet wird. Dabei ist die erste Schicht durch ein Polymer gegeben, welches wasserlöslich ist. Diese Schicht erfüllt primär die Bereitstellung der gewünschten Gasbarriere. Diese Schicht ist vor Feuchtigkeit und zusätzlich gegen mechanischen Missbrauch durch eine weitere, nicht wasserlösliche, resistente Schicht geschützt. Dieser Verbund erfüllt die hohen Anforderungen bezüglich der Gasbaniere, der Wasserresistenz und der mechanischen Belastbarkeit.

Ferner ist es üblich, die Kunststoff-Formkörper zwecks Verbesserung der optischen Erscheinung farblich zu variieren. Dies kann beispielsweise dadurch geschehen, dass das eingesetzte Polymere, vorzugsweise Polyethylenterephthalat (PET), beispielsweise mittels Pigmenten, eingefärbt wird. Ein Umwickeln mit gefärbten Papieren oder Folien (insbesondere Schrumpffolien) wird ebenfalls praktiziert. Das Einfärben des Kunststoffs ist jedoch oft bevorzugt, da es zu einem transparenten Produkt führt und Durchsicht auf den Inhalt gewährt.

Gemäß der nicht-vorveröffentlichten Deutschen Patentanmeldung 101 53 210.5 kann die Einfärbung wahlweise in der (inneren) Gasbarriereschicht (beispielsweise mit wasserlöslichen Farbstoffen) oder in der äußeren Barriereschicht (beispielsweise mit nichtwasserlöslichen Farbstoffen oder Pigmenten) erfolgen.

In einem herkömmlichen Recyclingprozess müssen die eingefärbten PET-Kunststoff-Formkörper von den nicht gefärbten getrennt werden, um ein ungefärbtes, sauberes PET zurück zu erhalten, welches im besten Falle wieder für die Herstellung von Kunststoff-Formkörpem, insbesondere Flaschen, geeignet ist (bottle to bottle recycling).

So beschreibt EP 0525708 A1 ein Verfahren zum Recyclieren von Mehrschichtformkörpern, die eine wasserlösliche Innenschicht aus einer Stärke-Polymermischung enthalten. Weiterhin beschreibt in E2 zum gleichen Zweck den Einsatz einer wasserlöslichen Schicht aus einem Aminogruppenenthaltenden Polymerisat und/oder Copolyerisaten aus Acrylaten und Metacrylaten.

Aufgabe der vorliegenden Erfindung ist es daher, ein Verfahren bereit zu stellen, welches gefärbte und nicht-gefärbte PET-Kunststoff-Formkörper in einem einzigen Verfahren und ohne vorgelagerten Sortieraufwand recyceln kann und als Recyclat ein homogenes, ungefärbtes PET-Granulat liefert, welches sich für die erneute Herstellung von Kunststoff-Formkörpern eignet.

Ferner ist es wünschenswert, reine, d.h. aus nur einem Polymeren bestehende Recyclate zu erhalten, da sortenreine Ausgangsstoffe problemlos zu neuen, reinen Produkten umgesetzt werden können. So ist beispielsweise das Recycling von Kunststoffformkörpern, die eine Barriereschicht im Innern des Formkörpers aufweisen, wie beispielsweise Formkörper, die durch die Coextrusion von PET mit Ethylenvinylalkohol erhalten werden, nicht sortenrein zu recyceln. Besonders bei mehrfachem Recyceln kommt es beispielsweise in diesem Fall zu einer Akkumulation von Ethylenvinylalkohol im PET, welches sich auf die Eigenschaften desselben (Verarbeitbarkeit, Beständigkeit, Transparenz usw.) auswirkt.

Die Aufgabe wird dadurch gelöst, dass man die gemäß der nicht-vorveröffentlichten Deutschen Patentanmeldung 101 53 210.5 beschichteten Kunststoff-Formkörper in einem erste Verfahrensschritt schreddert (granuliert), wobei eine Vielzahl kleinerer Teilchen entsteht. Die so erhaltenen Teilchen (auch Flakes genannt) werden nachfolgend mit Wasser aufgeschlämmt. Aber auch schon während des Schredderprozesses kann Wasser eingesetzt werden, insbesondere zur Vermeidung von Stäuben und zur Bindung von Kleinstteilchen. Durch die mechanische Zerkleinerung der Kunststoff-Formkörper wird die spezifische Oberfläche des Kunststoff-Formkörpers im Verhältnis zum nicht geschredderten Ausgangsprodukt stark erhöht und die zuvor geschützte Polyvinylalkoholbarriereschicht wird teilweise freigelegt, wodurch der Angriff von Wasser ermöglicht wird. Das Wasser löst die nun ungeschützte Polyvinylalkoholschicht und der Polyvinylalkohol wird in die Wasserphase verbracht. Ist die Polyvinylalkoholschicht eingefärbt gewesen, wird neben dem Polyvinylalkohol auch der wasserlösliche Farbstoff in das Wasser freigesetzt.

Gleichzeitig damit verbunden ist die Abtrennung der äußeren, evtl. gefärbten, Deckschicht. Die in Relation zu den granulierten PET-Flakes leichtere, extrem dünne ehemalige (evtl. gefärbte) Deckschicht kann leicht an die Oberfläche gelangen, während die spezifisch schwereren PET-Teilchen zu Boden sinken. Durch eine einfache Überlauf-Verfahrensweise kann so die abgelöste ehemalige (ggf. gefärbte) Deckschicht abgetrennt und separiert werden.

Somit lassen sich die drei Komponenten des nach der nicht-vorveröffentlichten Deutschen Patentanmeldung 101 53 210.5 hergestellten Kunststoff-Formkörpers einfach in ihre Bestandteile trennen; PET sedimentiert, Polyvinylalkohol (und ggf. wasserlöslicher Farbstoff) löst sich im Wasser und die (ggf. gefärbte) Deckschicht wird z.B. über einen Überlauf abgetrennt.

Dabei ist es egal, ob eine oder beide Deck- bzw. Barriereschichten eingefärbt waren, in jedem Falle erhält man reines, nicht gefärbtes PET zurück.

Ein bevorzugter, optionaler Verfahrensschritt besteht darin, die erhaltenen PET-Flakes vom Wasser zu befreien und in ein Bad aus geeigneten organischen Lösungsmitteln zu verbringen, welche selektiv eventuell vorhandene Restmengen der äußeren Deckschicht zu lösen vermögen. Geeignet sind Alkohole, vorzugsweise einwertige C₁- bis C₁₀- Alkohole, besonders bevorzugt C₂- bis C₆₋Alkohole. Damit wird erreicht, dass selbst geringste Spuren von verbliebenem Deckschichtmaterial entfernt wird und ggf. andere, in diesen Lösemitteln lösliche Verunreinigungen vom PET entfernt werden können. Somit wird ein besonders hoher Reinigungsgrad der PET-Flakes erzielt.

Dies ist ein besonderer Vorteil gegenüber bestehenden, im PET gefärbtem Material, Produkten. Statt farbenreine PET-Gebinde sortieren zu müssen, können alle erfindungsgemäß beschichteten, ungefärbten oder eingefärbten Produkte unsortiert dem Recycling zugeführt werden. Es wird universell einsetzbares PET zurückgewonnen, welches sich auf für die Wiederverwendung als Flaschenrohstoff einsetzen lässt. Der Einsatz von Coextrudaten, die bisher zur Lösung des Barriereproblems in Gebrauch waren, kann damit vermieden werden. Spezielle, teure Barrierekunststoffe wie beispielsweise Ethylenvinylalkohole müssen nicht mehr eingesetzt werden und die technisch aufwendige und teuere Coextrusionstechnologie wird nicht benötigt. Dies vereinfacht die technische Herstellung entsprechender Kunststoff-Formkörper bzw. der Vorformlinge. Gleichzeitig ergeben sich logistische und finanzielle Vorteile, da auf einen (teuren) Rohstoff verzichtet werden kann.

## Patentansprüche

1. Verfahren zum Recyceln von PET-Formkörpern, die mit einer ersten, wasserlöslichen Schicht aus Polyvinylalkohol und mit mindestens einer zweiten, wasserunlöslichen Schicht aus Poylvinylbutyral beschichtet sind, wobei man
a) den beschichteten PET-Formkörper mechanisch zu kleinen Teilchen zerkleinert,
b) die zerkleinerten Teile in Wasser aufschlämmt, wodurch sich die wasserlösliche Schicht auflöst und es zu einer Separation der Deckschicht von dem PET-Formkörper kommt, und
c) anschließend die zerkleinerten Teile der Deckschicht von den zerkleinerten Teilchen des PET-Formkörpers separiert.

2. Verfahren gemäß Anspruch 1, **dadurch gekennzeichnet, dass** die Separation der zerkleinerten Teilchen der Deckschicht von den zerkleinerten Teilchen des Kunststoff-Formkörpers **dadurch** verfolgt, dass man das Material der Deckschicht in Alkohol löst.

## Claims

1. Method for recycling PET molded bodies, which are coated with a first, water-soluble layer made from polyvinyl alcohol and with at least one second, water-insoluble layer made from polyvinyl butyral, wherein
a) the coated PET molded body is mechanically reduced in size to small particles,
b) the size-reduced particles are slurried in water, thereby dissolving the water-soluble layer and separating the covering layer from the PET molded body, and
c) the size-reduced particles of the covering layer are subsequently separated from the size-reduced particles of the PET molded body.

2. Method according to claim 1, **characterized in that** the separation of the size-reduced particles of the covering layer from the size-reduced particles of the plastic molded body is carried out by dissolving the covering layer in alcohol.

## Revendications

1. Procédé de recyclage de corps moulés en PET qui sont revêtus d'une première couche d'alcool polyvinylique, soluble dans l'eau et d'au moins une seconde couche de butyraldéhyde polyvinylique, insoluble dans l'eau, dans lequel :
a) on broie mécaniquement en petites particules le corps moulé en PET revêtu,
b) on met les parties broyées sous forme de boue dans l'eau, avec comme résultat que la couche soluble dans l'eau se dissout et que l'on parvient à une séparation de la couche de recouvrement d'avec le corps moulé en PET, et
c) on sépare subséquemment les parties broyées de la couche de recouvrement d'avec les particules broyées du corps moulé en PET.

2. Procédé selon la revendication 1, **caractérisé en ce que** la séparation des particules broyées de la couche de recouvrement d'avec les particules broyées du corps moulé en plastique est poursuivie en dissolvant le matériau de la couche de recouvrement dans de l'alcool.
